# EUROPÄISCHE PATENTSCHRIFT

(11) **EP 2 865 584 B1**
(45) Veröffentlichungstag und Bekanntmachung des Hinweises auf die Patenterteilung: **01.05.2019**
(21) Anmeldenummer: 14197221.6
(22) Anmeldetag: 29.05.2009
(51) Int. Cl.: B62D 29/00, B62D 33/04

(54) **Verfahren zum Herstellen eines Nutzfahrzeugaufbaus**
Method for manufacturing a commercial vehicle structure
Procédé de fabrication d'une structure de véhicule utilitaire

(30) Priorität: 03.06.2008 DE 102008026559; 25.02.2009 DE 102009010616
(43) Veröffentlichungstag der Anmeldung: 29.04.2015
(62) Teilanmeldung aus: 13179150.1
(73) Patentinhaber: Kögel Trailer GmbH & Co. KG, 89349 Burtenbach (DE)
(72) Erfinder: Lima, Joachim, 89601 Schelklingen (DE)
(74) Vertreter: Kilchert, Jochen

(56) Entgegenhaltungen:
- EP-A- 1 566 553
- EP-A1- 1 920 999
- WO-A-00/37303
- DE-A1- 2 545 741
- DE-A1- 10 249 307
- DE-A1- 19 727 635
- DE-C1- 19 628 431
- DE-U1- 20 300 309
- FR-A- 2 737 875

## Beschreibung

Die Erfindung betrifft ein Verfahren zum Herstellen eines Nutzfahrzeugaufbaus gemäß dem Oberbegriff des Patentanspruchs 1. Ein Verfahren zur Herstellung eines Nutzfahrzeugaufbaus der eingangs genannten Art ist beispielsweise aus der DE 196 28 431 C1 bekannt.

EP 1 566 553 A1 offenbart ein Verfahren zum Verbinden von Längs- und Querträgern für die Ladeplattform mittels einer Stützstruktur, die durch Stanznietverbindungen jeweils mit einem Längs- und einem Querträger verbunden wird.

DE 197 27 635 A1 beschreibt einen Nutzfahrzeugaufbau, insbesondere einen Pritschenaufbau mit Planenabdeckung, der eine Stirnwand bzw. Vorderwand, Seitenwände, ein Dach und eine Rückwand umfasst. Die Seitenwände, die Vorderwand und die Rückwand sind auf einem Leiterrahmen mit Querträgern und Längsträgern angeordnet, wobei sich die Querträger im Wesentlichen senkrecht zu den Längsträgern erstrecken und die Längsträger miteinander verbinden. Einen ähnlichen Nutzfahrzeugaufbau beschreibt FR 2 737 875 A1.

Die Stirn- bzw. Vorderwand des Pritschenaufbaus gemäß DE 197 27 635 A1 ist zwischen zwei Ecksäulen angeordnet, die am vorderen Längsende der Längsträger angebracht sind. Die Verbindung zwischen der Ecksäule und der Vorderwand erfolgt durch Verbindungsmittel, die in Bohrungen der Vorderwand und der Ecksäule eingebracht sind.

DE 197 27 635 A1 offenbart ferner, die Verbindung zwischen Vorderwand und Ecksäule mittels durchgehender Nieten herzustellen. Dafür sind mehrere einzelne Prozessschritte notwendig. Die Ecksäule wird zunächst vorgebohrt, daraufhin mit den Stirnwandprofilen ausgerichtet und die Bohrungen abschließend abgebohrt. In einem nächsten Schritt werden die Bohrspäne aus den Bohrlöchern entfernt, wofür eine Demontage bzw. ein Trennen der beiden Elemente notwendig sein kann. Daraufhin beginnt der eigentliche Nietvorgang, wobei die Nietstifte durch die Bohrungen gesteckt und schließlich die Nietköpfe geformt werden.

Um eine feste und zuverlässige Verbindung der Bauteile herzustellen, ist es erforderlich, dass die Bohrungen in den Bauteilen passgenau eingebracht sind und die Bauteile zum Nieten exakt positioniert sind. Vor allem der zusätzliche Herstellungsschritt des Vorbohrens macht diese Nietverbindungstechnik zu einem aufwändigen Verfahren mit entsprechend langen Produktionslaufzeiten.

Es ist daher Aufgabe der Erfindung, ein Verfahren zum Herstellen eines Nutzfahrzeugaufbaus anzugeben, das eine einfache und schnelle Herstellung ermöglicht und eine verbesserte Abdichtung aufweist.

Erfindungsgemäß wird diese Aufgabe durch den Gegenstand des Patentanspruchs 1 gelöst.

Der Erfindung liegt der Gedanke zugrunde, ein Verfahren zum Herstellen eines Nutzfahrzeugaufbaus anzugeben, wobei der Nutzfahrzeugaufbau einen Rahmen, der insbesondere Längsträger und zwischen den Längsträgern im Wesentlichen horizontal angeordnete Querträger umfasst, und ein Vorderwandpaneel aufweist, das eine vordere Laderaumbegrenzung bildet. Das Vorderwandpaneel wird zwischen Ecksäulen angeordnet, die sich im Bereich der vorderen Längsenden der Längsträger im Wesentlichen in vertikaler Richtung erstrecken und zwei Längsprofilteile aufweisen. Die Ecksäulen werden durch Stanznieten und/oder Durchsetzfügen miteinander verbunden. Zusätzlich können die Ecksäulen mit dem Vorderwandpaneel durch Stanznieten und/oder Durchsetzfügen verbunden werden.

Beim Stanznieten bzw. Durchsetzfügen ist kein Vorbohren der Bauteile notwendig, so dass die Verbindung der Ecksäulen mit dem Vorderwandpaneel und/oder der Längsprofilteile miteinander einfach und schnell durchgeführt werden kann. Der zeitliche Aufwand dieses Produktionsschrittes wird dadurch verringert und die Produktionskapazität gesteigert. Überdies wird eine im Wesentlichen glatte Innenoberfläche bereitgestellt, da bei Stanzniet- bzw. Durchsetzfügeverbindungen im Unterschied zu den bekannten Vollniet- bzw. Blindnietverbindungen im Wesentlichen keine Nietköpfe geformt werden, die über die zu verwendenden Bauteile hervorstehen. Damit wird auch das optische Erscheinungsbild des Nutzfahrzeugaufbaus verbessert.

Die in mehrere Längsprofilteile geteilte Ecksäule vereinfacht die Herstellung des Nutzfahrzeugaufbaus, da die einzelnen Längsprofilteile einen relativ einfach aufgebauten Querschnitt aufweisen und effizient und unkompliziert hergestellt werden können. Die einzelnen Längsprofilteile weisen gegenüber der genannten Ecksäule ein geringeres Gewicht auf, wodurch die Montage erleichtert wird. Außerdem können auf diese Weise je nach Verwendungszweck des Nutzfahrzeugaufbaus Längsprofilteile mit unterschiedlichen Querschnitten zu einer Ecksäule kombiniert werden.

Die Ecksäulen und/oder die Längsprofilteile können Verbindungsabschnitte aufweisen, die vor dem Stanznieten und/oder Durchsetzfügen mit einem Dichtmittel versehen werden.

Ferner kann das Vorderwandpaneel vor dem Stanznieten und/oder Durchsetzfügen mit den Ecksäulen verklebt werden.

Vorzugsweise werden die Längsprofilteile vor dem Stanznieten und/oder Durchsetzfügen durch eine zusätzliche formschlüssige Verbindung, insbesondere eine Nut-/Federverbindung, positioniert.

Die Erfindung wird im Folgenden anhand von Ausführungsbeispielen unter Bezug auf die beigefügten schematischen Zeichnungen näher erläutert. Darin zeigen
- Fig. 1:: eine Vorderansicht einer Vorderwand für einen nach dem erfindungsgemäßen Verfahren hergestellten Nutzfahrzeugaufbau;
- Fig. 2:: eine Draufsicht auf eine Vorderwand des Nutzfahrzeugaufbaus gemäß Fig. 1;
- Fig. 3:: einen Schnitt durch eine Ecksäule einer Vorderwand des Nutzfahrzeugaufbaus gemäß Fig. 2.

Im Rahmen der vorliegenden Erfindung beziehen sich die Bezeichnungen "vorne" und "hinten" auf die Fahrtrichtung des Nutzfahrzeugs. Beispielsweise bedeutet ein vorne angeordnetes Bauteil ein in Fahrtrichtung vorne angeordnetes oder vorderes Bauteil.

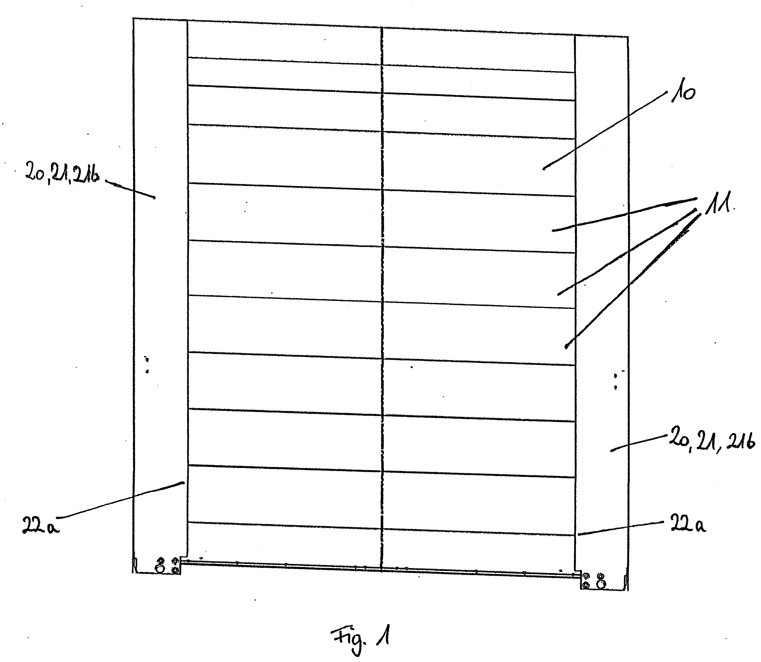

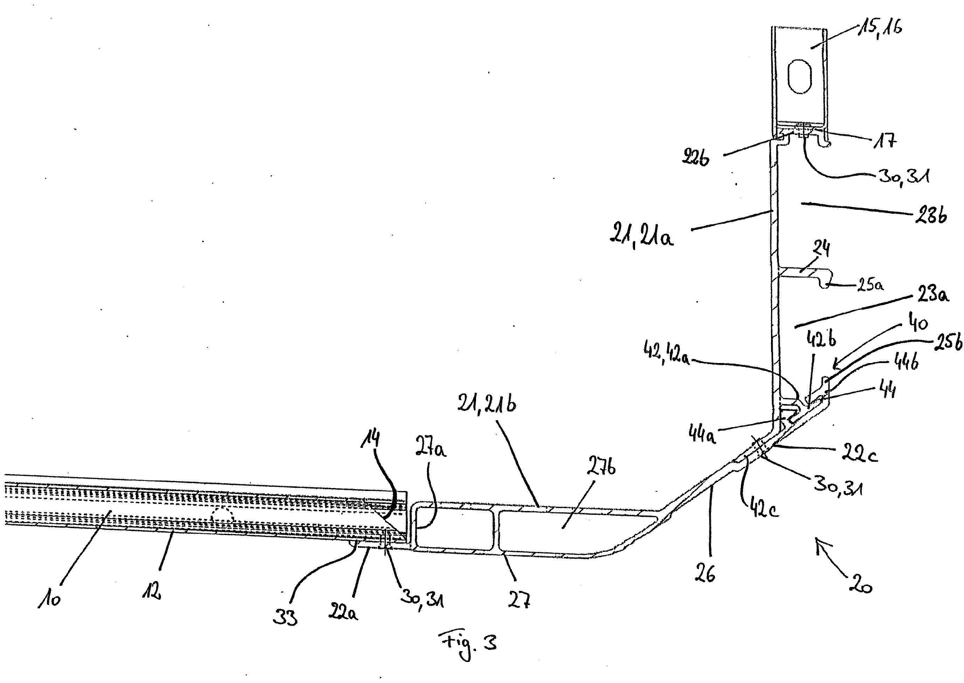

Fig. 1 zeigt eine Vorderwand eines Nutzfahrzeugaufbaus, die einzelne Paneelsegmente 11 bzw. Hohlprofile, insbesondere plankenartigen Hohlprofile, umfasst, die übereinander angeordnet das Vorderwandpaneel 10 bilden. Das in vertikaler Richtung unterste Paneelsegment 11a bzw. untere Randprofil ist mit dem Rahmen (nicht dargestellt) durch herkömmliche Blindnieten 13 fest verbunden. Das Randprofil und die darüber angeordneten weiteren Paneelsegmente 11b sind mit einer Ecksäule 20 durch Stanznieten verbunden. Aus fertigungstechnischen Gründen, um den Zugang durch ein Stanz-werkzeug bzw. eine Nietzange zu ermöglichen, sind die weiteren Paneelsegmente 11b an den Längsenden abgeschrägt, wie in Fig. 3 zu erkennen. Anstelle der abgeschrägten Längsenden 14 ist es auch möglich, Langlöcher oder entsprechend große Bohrungen im Bereich der zu setzenden Stanznieten vorzusehen. Für den Zugang der Nietzange ist im untersten Paneelsegment 11 bzw. Randprofil eine Bohrung bzw. Öffnung im Stanznietbereich vorgesehen. Grundsätzlich kann das zwischen den Ecksäulen 20 angeordnete Vorderwandpaneel 10 auch einteilig ausgeführt sein.

Die Erfindung ist nicht auf Nutzfahrzeugaufbauten mit einem Leiterrahmen beschränkt, sondern umfasst generell andere Rahmenarten, insbesondere in Schalenbauweise ausgeführte Rahmen.

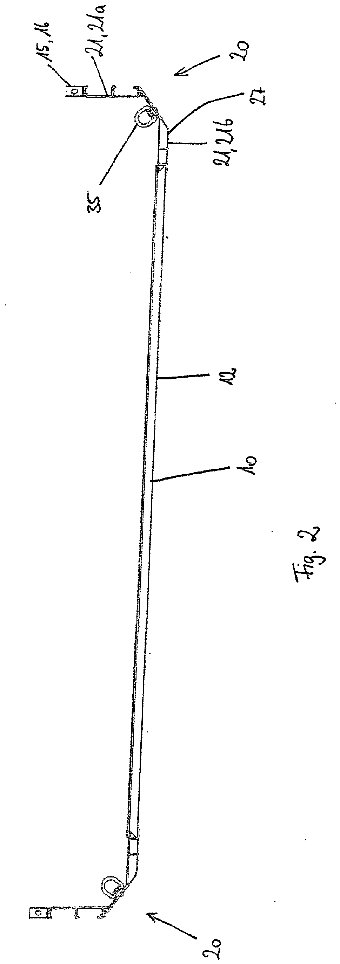

Wie in Fig. 2 dargestellt, sind die Ecksäulen 20 bzw. die Eckrungen zweiteilig ausgebildet und umfassen jeweils zwei Längsprofilteile 21, insbesondere ein Seitenteil 21a und ein Frontteil 21b. Die beiden Längsprofilteile 21 sind parallel zueinander und vertikal angeordnet. Das Seitenteil 21a ist der Seitenwand des Nutzfahrzeugaufbaus zugeordnet und erstreckt sich im Wesentlichen in Längsrichtung des Nutzfahrzeuges. Das Frontteil 21b ist der Vorderwand bzw. Stirnseite des Nutzfahrzeugaufbaus zugeordnet und erstreckt sich im Wesentlichen in Querrichtung des Nutzfahrzeuges. Es ist auch möglich, dass die Ecksäule 20 drei oder mehr Profilteile umfasst, wobei die Profilteile sowohl übereinander, als auch nebeneinander angeordnet sein können, wobei die Ecksäule 20 horizontal und/oder vertikal geteilt oder teilbar sein kann. Die beiden Ecksäulen 20 weisen eine spiegelbildlich einander entsprechende Form auf, so dass die nachfolgend beschriebenen Merkmale für beide Ecksäulen 20 offenbart sind.

Die Verbindung zwischen der Ecksäule 20 und den Anbauteilen, insbesondere mit dem Vorderwandpaneel 10, und/oder die Verbindung der Längsprofilteile 21 der Ecksäule 20 untereinander umfasst oder besteht aus Stanznietverbindungen 30 und/oder aus Durchsetzfügeverbindungen. Unter Stanznietverbindungen werden nicht lösbare Verbindungen verstanden, die ohne das beim Blindnieten notwendige Vorlochen bzw. Vorbohren herstellbar sind. Der an sich bekannte Stanzniet, insbesondere der Stanzvollniet, zeichnet sich durch eine umlaufende Schaftnut bzw. allgemein durch eine geeignete konkave Geometrie aus, in die der Werkstoff zumindest des matrizenseitigen Fügeteiles beim Setzen des Niets fließt und somit die Verbindung herstellt. Die Stanznietverbindung mit Vollniet bzw. Senkvollniet ist von außen an einem beidseitig bündigen Abschluss erkennbar. Anstelle des Senkvollniets kann ein an sich bekannter Halbhohlniet verwendet werden. Der Halbhohlniet durchdringt nicht beide zu verbindenden Fügeteile vollständig, sondern wird in einem der beiden Fügeteile verankert. Daher zeichnet sich die Stanzverbindung mit Halbhohlniet durch einen einseitig bündigen Abschluss aus. Bei der an sich bekannten Durchsetzfügeverbindung, auch Clinchverbindung genannt, ist eine lokale Materialumformung bzw. Hinterschneidung beider Fügeteile vorgesehen, die die Fügeteile form- und kraftschlüssig miteinander verbindet, ohne dass ein Zusatzwerkstoff oder Fügehilfsmittel erforderlich ist, ebenso wenig wie ein Vorlochvorgang.

Die Anordnung und Verbindung der einzelnen Bauteile ist in Fig. 3 dargestellt, die einen Querschnitt durch eine Ecksäule 20 mit den beiden Längsprofilteile 21, nämlich das Seitenteil 21a und das Frontteil 21b sowie die angrenzenden Bauteile eines Nutzfahrzeugaufbaus beispielhaft zeigt.

Das Frontteil 21b ist fluchtend mit dem Vorderwandpaneel 10 ausgerichtet und weist einen vorderen bzw. ersten Verbindungsabschnitt 22a auf, der an einem Vorderwand nahen vertikalen Ende der Ecksäule 20 angeordnet ist. Der vordere Verbindungsabschnitt 22a bildet einen Fortsatz, insbesondere einen ersten Fortsatz, der über eine Eckkante 27a des Frontteils 21b vorsteht, die dem Vorderwandpaneel 10 gegenüber angeordnet ist. Dabei ist der vordere Verbindungsabschnitt 22a als Verlängerung einer Außenfläche 27 des Frontteils 21b ausgeführt. Der vordere Verbindungsabschnitt 22a und die Eckkante 27a bilden einen Aufnahmewinkel, insbesondere ein L-förmiges Einfassprofil, in dem der vordere Verbindungsabschnitt 22a angeordnet und durch die Stanzverbindungen 30 befestigt ist.

Dazu überlappt der vordere Verbindungsabschnitt 22a einen Randbereich des Vorderwandpaneels 10. Der vordere Verbindungsabschnitt 22a liegt bündig an einer Außenfläche 12 des Vorderwandpaneels 10 an und bildet eine Kontakt- bzw. Verbindungsfläche zwischen der Ecksäule 20 und dem Vorderwandpaneel 10, insbesondere zwischen dem Frontteil 21b und dem Vorderwandpaneel 10. Der vordere Verbindungsabschnitt 22a weist Stanznietverbindungen 30 auf, die in vertikaler Richtung entlang des vorderen Verbindungsabschnittes 22a angeordnet sind. In Fig. 3 ist beispielhaft ein Stanzvollniet 31 dargestellt ist, der den Verbindungsabschnitt 22a und die Außenfläche 12 des Vorderwandpaneels 10 durchdringt. Der Stanzvollniet 31, insbesondere Senkvollniet, schließt bündig mit der Außenseite des vorderen Verbindungsabschnitts 22a ab. Im Bereich der Kontaktfläche bzw. des Verbindungsabschnitts 22a kann eine zusätzliche Klebeverbindung 33 oder ein Dichtmittel bzw. eine Dichtmasse vorgesehen sein, wobei die Festigkeit der Stanzverbindung 30 im Allgemeinen für die Stabilität des Aufbaus ausreichend ist.

Im Anschluss an den vorderen Verbindungsabschnitt 22a weist das Frontteil 21b einen Hohlkammerkörper 27b auf, der zwei oder mehr in Querrichtung des Nutzfahrzeuges angeordnete Kammern aufweist und für die Stabilität der Ecksäule 20 sorgt.

Am von der Vorderwand entfernten vertikalen Ende des Frontteils 21b, insbesondere des Hohlkammerkörpers 27b, ist ein schräger Abschnitt 26 bzw. Verbindungssteg angeordnet. Der schräge Abschnitt 26 bildet einen Fortsatz, insbesondere einen zweiten Fortsatz, der über den Hohlkammerkörper 27b schräg nach hinten vorsteht. Der zweite Fortsatz ist als rückwärtige Verlängerung der Außenseite 27 des Frontteils 21b ausgebildet, wobei sich der Hohlkammerkörper 27b nach außen verjüngt und in den schrägen Abschnitt 26 übergeht.

Der schräge Abschnitt 26 ist bezüglich des Frontteils 21b bzw. des Vorderwandpaneels 10 in einem Winkel angeordnet, wobei der Winkel zwischen 30° und 60° betragen kann. Diese Anordnung des schrägen Abschnitts 26 ist nicht zwingend erforderlich, vielmehr sind auch andere geometrische Formen möglich. Beispielsweise kann der Abschnitt 26 abgerundet oder rechtwinklig ausgebildet sein. Wie in Fig. 2 zu erkennen, ist im Bereich des schrägen Abschnitts 26 eine Zurröse 35 angeordnet, die zum Inneren des Nutzfahrzeugsaufbaus ausgerichtet ist.

Der schräge Abschnitt 26 umfasst einen überlappenden bzw. zweiten Verbindungsabschnitt 22c, der sowohl dem Frontteil 21b, als auch dem Seitenteil 21a zugeordnet ist, wobei sich im Bereich des überlappenden Verbindungsabschnitts 22c das Seitenteil 21a und das Frontteil 21b teilweise überlappen bzw. übereinander angeordnet sind. Dazu umfasst das Seitenteil 21a am frontteilnahen Ende einen Steg 42c der parallel zum schrägen Abschnitt 26 angeordnet ist und an diesem anliegt.

Um im Innenbereich des Nutzfahrzeugaufbaus eine im Wesentlichen glatte Oberfläche zu erreichen, ist der schräge Abschnitt 26 im Bereich des überlappenden Verbindungsabschnitts 22c nach außen ausgeformt bzw. weist eine sickenförmige Ausnehmung auf, in der der Steg 42c aufgenommen ist. Der schräge Abschnitt 26 des Frontteils 21b erstreckt über das Seitenteil 21a hinaus und bildet einen Teil eines formschlüssigen Verbindungsmittels 40, das eine T-förmige Nut 44, die dem Frontteil 21b zugeordnet ist, und einen schienenförmigen Fortsatz 42, der dem Seitenteil 21a zugeordnet ist, umfasst. Die T-förmige Nut 44 ist durch zwei Hakenprofile 44a, 44b gebildet, wobei ein inneres Hakenprofil 44a in der Nähe des überlappenden Verbindungsabschnittes 22c angeordnet ist und am Seitenteil 21a anliegen kann. Dem inneren Hakenprofil 44a gegenüber ist ein äußeres Hakenprofil 44b angeordnet, das den Abschluss des schrägen Abschnitts 26 bildet und im Wesentlichen bündig mit einer seitlichen Außenfläche des Nutzfahrzeugaufbaus abschließt.

Das Seitenteil 21 ist im Wesentlichen in Längsrichtung des Nutzfahrzeugaufbaus angeordnet und vorzugsweise fest mit einem Längsträger bzw. allgemein mit dem Rahmen (nicht dargestellt) verbunden. Ein vorderer Bereich des Seitenteils 21a ist schräg angeordnet und bildet den vorgenannten Steg 42c. Der vordere Bereich des Seitenteils 21a bzw. der Steg 42c bildet mit dem schrägen Abschnitt 26 des Frontteils 21b, insbesondere mit der sickenförmigen Ausnehmung des schrägen Abschnitts 26, den überlappenden Verbindungsbereich 22c.

Zur Verbindung des Seitenteils 21a und des Frontteils 21b sind im Bereich des überlappenden Verbindungsabschnitts 22c Stanznietverbindungen 30 vorgesehen, die vertikal übereinander entlang der Ecksäule 20 angeordnet sind. Dabei durchdringen Stanznieten bzw. im Stanznietverfahren gesetzte Vollnieten 31 den Steg 42c und den Abschnitt 26 und verbinden diese form- und kraftschlüssig. Andere Stanznietverfahren, wie beispielsweise Stanznieten mit Halbhohlniet, oder alternativ Durchsetzfügeverfahren können zur Verbindung der einzelnen Bauteile eingesetzt werden.

In der Nähe des überlappenden Verbindungsabschnitts 22c weist das Seitenteil 21a einen schienenförmigen Fortsatz 42 auf, der eine Schienenbasis 42 und einen Schienenkopf 42b umfasst. Der schienenförmige Fortsatz 42 ist in seiner Form der T-förmigen Nut 44 des Frontteils 21b angepasst, d.h. ebenfalls T-förmig ausgebildet. Die Schienenbasis 42 ist am Seitenteil 21a angeformt und verläuft im Wesentlichen rechtwinklig zum Seitenteil 21, wobei die Schienenbasis 42 in der Nähe des Schienenkopfes 42b einen Winkel aufweist, so dass das schienenkopfseitige Ende der Schienenbasis 42a im Wesentlichen rechtwinklig zum schrägen Abschnitt 26 des Frontteils 21b ausgerichtet ist. Der Schienenkopf 42b ist mit der Schienenbasis 42a einteilig ausgebildet und parallel zum schrägen Abschnitt 26 ausgerichtet. Der Schienenkopf 42b ist in der T-förmigen Nut 44 des Frontteils 21b angeordnet bzw. darin eingepasst. Dazu umgreifen die Hakenprofile 44a, 44b den Schienenkopf 42b beidseitig. Andere formschlüssige Verbindungen sind möglich, sofern die beiden Elemente des formschlüssigen Verbindungsmittels 40 eine zueinander korrespondierende Form aufweisen. Derartige Formen können beispielsweise Dreiecksformen, Vierecksformen oder generell mehreckige Formen umfassen. Auch runde Formen sind möglich.

Angrenzend an den überlappenden Verbindungsabschnitt 22c weist das Seitenteil 21a zwei oder mehr Aufnahmebereiche 23a, 23b auf, die durch ein Rückhalteteil 24 voneinander getrennt bzw. gegeneinander abgegrenzt sind.

Die Aufnahmebereiche 23a, 23b sind zur Außenseite des Nutzfahrzeugaufbaus offen. Der in Fahrtrichtung vordere Aufnahmebereich 23a ist zur Aufnahme eines Betätigungsmittels, insbesondere einer Wickelwelle (nicht dargestellt) für eine Seitenplane, angepasst. Um die Wickelwelle im vorderen Aufnahmebereich 23a zu halten, bildet das Rückhalteteil 24 an seinem freien Ende eine Haltenase 25a, die sich im Wesentlichen in Fahrtrichtung nach vorne erstreckt. Der Haltenase 25a gegenüberliegend bildet das Frontteil 21b im Bereich des äußeren Hakenprofils 44b einen Vorsprung 25b, der sich im Wesentlichen entgegen der Fahrtrichtung des Nutzfahrzeugs erstreckt und mit der Nase 25a fluchtet. Das Betätigungsmittel, insbesondere die Wickelwelle, wird dadurch sowohl vom Seitenteil 21a, als auch vom Frontteil 21b gehalten, insbesondere vom Rückhalteteil 24, der Nase 25a und dem Vorsprung 25b. Das Rückhalteteil 24 begrenzt ferner den hinteren Aufnahmebereich 23b, der ebenfalls ein Betätigungsmittel aufnehmen kann. Vorzugsweise ist der hintere Aufnahmebereich 23b zur Aufnahme einer Hubeinrichtung (nicht dargestellt) für ein Hubdach angepasst.

In dem Fall, dass das Seitenteil 21a für einen Nutzfahrzeugaufbau eingesetzt wird, der kein Hubdach umfasst, kann der hintere Aufnahmebereich 23b eine geringere Erstreckung in Fahrtrichtung des Nutzfahrzeugs aufweisen. Der hintere Aufnahmebereich 23b fungiert dabei als Zugangsöffnung, so dass die Stanznietverbindung 30 zwischen Seitenteil 21a und Anbauelement 15 bzw. Lattentasche 16 mit Hilfe einer Nietzange gesetzt werden kann. Um Zugang zum hinteren Verbindungsabschnitt 22b zu erlangen, wird die Nietzange dabei in die durch den verkürzten hinteren Aufnahmebereich 23b gebildete Zugangsöffnung eingeführt.

Am hinteren, vom Frontteil entfernten vertikalen Ende des Seitenteils 21a ist im Bereich des hinteren Aufnahmebereichs 23b ein hinterer bzw. dritter Verbindungsabschnitt 22b angeordnet, der sich im Wesentlichen senkrecht zur Fahrtrichtung bzw. zum Seitenteil 21a erstreckt. Insgesamt bildet das Seitenteil 21a mit dem schienenförmigen Fortsatz 42, dem Rückhalteteil 24 und dem hinteren Verbindungsabschnitt 22b ein im Wesentlichen E-förmiges Profil.

Der hintere Verbindungsabschnitt 22b liegt bündig an einer Stirnfläche 17 eines Anbauelements 15 an und ist mit diesem durch Stanznietverbindungen 30 und/oder Durchsetzfügeverbindungen verbunden. Das Anbauelement 15 ist im dargestellten Ausführungsbeispiel als Lattentasche 16 bzw. Aufnahmetasche für Latten ausgeführt, wobei mehrere Lattentaschen 16 im Abstand übereinander angeordnet und jeweils mit der Ecksäule 20 durch Stanznietverbindungen 30 und/oder Durchsetzfügeverbindungen verbunden sind. In dem in Figur 3 dargestellten Querschnitt ist ein Stanzniet 31 dargestellt, der die Stanznietverbindung 30 zwischen Seitenteil 21a und Anbauelement 15 bzw. Lattentasche 16 bildet.

Generell können die Verbindungen zwischen Vorderwandpaneel 10 und Ecksäule 20 zwischen Anbauelement 15 und Ecksäule 20 und/oder zwischen den Längsprofilteilen 21 der Ecksäule 20 untereinander als Stanzniet- und/oder Durchsetzfügeverbindungen realisiert werden. Andere Verbindungsarten, auch teilweise, sind möglich. Die Ecksäule 20 muss nicht zwangsläufig aus zwei Längsprofilteilen 21 bestehen, sondern kann auch einteilig ausgebildet sein. Außerdem ist es denkbar, dass die Ecksäule 20 aus mehr als zwei Profilteilen, insbesondere Längsprofilteilen 21 aufgebaut ist.

Im Zusammenhang mit dem Herstellungsverfahren kommen generell unterschiedliche Fügereihenfolgen in Betracht. Beispielsweise kann zuerst das Frontteil 21b mit dem Vorderwandpaneel 10 durch Stanznieten verbunden werden. Danach wird das Seitenteil 21a in das Frontteil 21b eingeschoben und ebenfalls mittels Stanznieten befestigt. Diese Fügereihenfolge hat den Vorteil, dass relativ klein dimensionierte Stanznietwerkzeuge verwendet werden können. Es ist auch möglich, zuerst die Ecksäule 20, d.h. das Frontteil 21b und das Seitenteil 21a miteinander zu verbinden und dann das Vorderwandpaneel 10 an der so hergestellten Ecksäule 20 zu befestigen. Hierfür sind entsprechend größere Stanznietwerkzeuge erforderlich. Derartige Stanznietwerkzeuge sind be-kannt.

Die Verbindung der Längsprofilteile 21 wird unabhängig von der Reihenfolge der Vorderwandherstellung dadurch hergestellt, dass die beiden Längsprofilteile 21 mit Hilfe des formschlüssigen Verbindungsmittels 40 positioniert werden, indem der schienenförmige Fortsatz 42 in die T-förmige Nut 44 eingeschoben wird. Durch diese Fügebewegung wird eine erste Verbindung zwischen Seitenteil 21a und Frontteil 21b erreicht und die beiden Längsprofilteile 21 zur endgültigen Verbindung ausgerichtet. Mit einem Stanznietwerkzeug werden anschließend die Stanznietverbindungen 30 eingebracht, wobei sich die Stanznietverbindungen 30 dadurch auszeichnen, dass sie im Wesentlichen in einem einzigen Verfahrensschritt gesetzt werden können, da der Stanzniet 31 gleichzeitig als Stanzstempel dient.

Die Positionierung des Vorderwandpaneels 10 vor den Stanznieten kann durch eine Klebeverbindung 33 erfolgen, die zwischen dem vorderen Verbindungsabschnitt 22a und dem Vorderwandpaneel 10 eingebracht wird. Sobald das Vorderwandpaneel 10 bezüglich der Ecksäule 20 bzw. das Frontteil 21b bezüglich des Vorderwandpaneels 10 ausgerichtet und fixiert ist, werden die Stanznietverbindungen 30 gesetzt.

Mit der kombinierten Stanzniet-/ und Klebeverbindung wird eine erhöhte Stabilität der gesamten Vorderwand des Nutzfahrzeugaufbaus erreicht, wobei der Klebstoff zudem als Dichtmittel wirken kann. Grundsätzlich können durch die Verbindung von Stanzniet- und/oder Durchsetzfügeverbindungen zwischen alle zu verbindenden Bauteile Dichtmittel eingebracht werden. Es ist möglich, die Klebeverbindung 33 anstelle der Stanznietverbindungen 30 vorzusehen, wobei Stanznieten die bevorzugte und erfindungsgemäße Variante ist.

Zur Abdichtung der Bauteile wird eine Dichtmasse eingesetzt, wobei im Wesentlichen die Verbindung zwischen Vorderwand 10 und Ecksäule 20 im Bereich des vorderen Verbindungsabschnitts 22a mit der Dichtmasse versehen wird. Im Bereich des überlappenden Verbindungsabschnitts 22c zwischen den beiden Längsprofilteilen 21 wird im Allgemeinen allein durch die Stanzniet- und/oder Durchsetzfügeverbindung eine ausreichende Abdichtung erreicht. Vorzugsweise erfolgt das Stanznieten während der offenen Zeit des Dichtmittels, das durch eine leichte Klebewirkung die Fixierung der Bauteile in ihrer endgültigen Position unterstützt, so dass die Stanznietverbindungen 30 bzw. die Durchsetzfügeverbindungen passgenau eingebracht werden können.

Die Verwendung von Stanznietverbindungen 30 bzw. Durchsetzfügeverbindungen ist nicht auf den Bereich der Vorderwand oder der vorderen Ecksäulen 20 begrenzt. Vielmehr ist es möglich, Stanznietverbindungen 30 bzw. Durchsetzfügeverbindungen allgemein an einem Nutzfahrzeugaufbau als zollsichere Nietverbindung zu verwenden. Das Stanznieten kann also beispielsweise auch zur Herstellung einer geteilten Ecksäule 20 für eine Rückwand eines Nutzfahrzeugaufbaus eingesetzt werden. Ebenso können die Bauelemente bzw. Profilteile einer Rückwandtür durch Stanznieten verbunden sein. Das gilt auch für Rückwandtüren, die die gleiche Höhe aufweisen wie seitliche Bordwände. Weitere Einsatzgebiete für Stanznietverbindungen 30 bzw. Durchsetzfügeverbindungen sind die Herstellung von seitlichen, abklappbaren Bordwänden und die Herstellung von Transport- bzw. Staukästen für Nutzfahrzeuge bzw. Nutzfahrzeugaufbauten. Bei der Verbindung von Dachspriegeln mit Laufwagen bzw. Dachspriegellaufrollern können ebenfalls Stanznietverbindungen 30 bzw. Durchsetzfügeverbindungen zum Einsatz gelangen. Ferner eignet sich das Stanznieten allgemein zur Befestigung von Anbauteilen wie beispielsweise Palettenanschlägen, seitlichen Schutzeinrichtungen, Einhakprofilen, Elektrik- und Druckluftanschlusshaltern, Bedienteilkonsolen, Rammanfahrschutzelementen, die seitlich und hinten angeordnet sein können, Regenleisten, die auf Endspriegeln montiert sind, Halterungen für Seitenmarkungsleuchten, Beleuchtungsträgern, Staukästen an der Vorderwand bzw. am Vorderwandpaneel 10 und/oder Lattentaschen an Mittelrungen und Rückwandecksäulen.

### Bezugszeichenliste

- 10: Vorderwandpaneel
- 11: Paneelsegment
- 11a: unterstes Paneelsegment
- 11b: weiteres Paneelsegment
- 12: Außenfläche
- 13: Blindniet
- 14: abgeschrägtes Längsende
- 15: Anbauelement
- 16: Lattentasche
- 17: Stirnfläche
- 20: Ecksäule
- 21: Längsprofilteile
- 21a: Seitenteil
- 21b: Frontteil
- 22a: vorderer Verbindungsabschnitt
- 22b: hinterer Verbindungsabschnitt
- 22c: überlappender Verbindungsabschnitt
- 23a: vorderer Aufnahmebereich
- 23b: hinterer Aufnahmebereich
- 24: Rückhalteteil
- 25a: Haltenase
- 25b: Vorsprung
- 26: schräger Abschnitt
- 27: Außenseite
- 27a: Eckkante
- 27b: Hohlkammerprofilkörper
- 30: Stanznietverbindung
- 31: Stanzvollniet
- 33: Klebeverbindung
- 35: Zurröse
- 40: formschlüssiges Verbindungsmittel
- 42: schienenförmiger Fortsatz
- 42a: Schienenbasis
- 42b: Schienenkopf
- 42c: Steg
- 44: T-förmige Nut
- 44a: inneres Hakenprofil
- 44b: äußeres Hakenprofil

## Patentansprüche

1. Verfahren zum Herstellen eines Nutzfahrzeugaufbaus mit einem Rahmen, der Längsträger und zwischen den Längsträgern im Wesentlichen horizontal angeordnete Querträger umfasst, und einem Vorderwandpaneel (10), das eine vordere Laderaumbegrenzung bildet, wobei das Vorderwandpaneel (10) zwischen Ecksäulen (20) angeordnet wird, die sich im Bereich der vorderen Längsenden der Längsträger im Wesentlichen in vertikaler Richtung erstrecken und wenigstens zwei Längsprofilteile (21) aufweisen,
**dadurch gekennzeichnet, dass**
die Längsprofilteile (21) durch Stanznieten (30) und/oder Durchsetzfügen miteinander verbunden werden.

2. Verfahren nach Anspruch 1,
**dadurch gekennzeichnet, dass**
die Ecksäulen (20) mit dem Vorderwandpaneel (10) durch Stanznieten und/oder Durchsetzfügen verbunden werden.

3. Verfahren nach Anspruch 1 oder 2,
**dadurch gekennzeichnet, dass**
die Längsprofilteile (21) Verbindungsabschnitte (22a, 22b, 22c) aufweisen, die vor dem Stanznieten und/oder Durchsetzfügen mit einem Dichtmittel versehen werden.

4. Verfahren nach Anspruch 2 oder 3,
**dadurch gekennzeichnet, dass**
das Vorderwandpaneel (10) vor dem Stanznieten und/oder Durchsetzfügen mit den Ecksäulen (20) verklebt wird.

5. Verfahren nach einem der Ansprüche 1 bis 4,
**dadurch gekennzeichnet, dass**
die Längsprofilteile (21) vor dem Stanznieten und/ oder Durchsetzfügen durch eine zusätzliche formschlüssige Verbindung (40), insbesondere eine Nut/Feder-Verbindung, positioniert werden.

6. Verfahren nach einem der vorhergehenden Ansprüche,
**dadurch gekennzeichnet, dass**
die Ecksäulen (20) und das Vorderwandpaneel (10) Verbindungsabschnitte (22a, 22b, 22c) aufweisen, die vor dem Stanznieten und/oder Durchsetzfügen mit einem Dichtmittel versehen werden.

## Claims

1. Method of manufacturing a commercial vehicle structure with a frame which comprises longitudinal supports and between the longitudinal supports essentially horizontally arranged transverse supports, and a front wall panel (10) that forms a front cargo space boundary, wherein the front wall panel (10) is arranged between corner pillars (20) which in the area of the front longitudinal ends of the longitudinal supports essentially extend in the vertical direction and comprise at least two longitudinal profile parts (21)
**characterised in that**
the longitudinal profile parts (21) are connected to each other by punch riveting (30) and/or clinching.

2. Method according to claim 1
**characterised in that**
the corner pillars (20) are connected to the front wall panel (10) by punch riveting and/or clinching.

3. Method according to claim 1 or 2
**characterised in that**
the longitudinal profile parts (21) comprise connection sections (22a, 22b, 22c) which before punch riveting and/or clinching are provided with a sealing agent.

4. Method according to claim 2 or 3
**characterised in that**
before punch riveting and/or clinching the front wall panel (10) is adhered to the corner pillars (20).

5. Method according to claims 1 to 4
**characterised in that**
before punch riveting or clinching the longitudinal profile parts (21) are positioned by way of an additional interlocking connection (40), in particular a tongue and groove connection.

6. Method according to any one of the preceding claims
**characterised in that**
the corner pillars (20) and the front wall panel (10) have connection sections (22a, 22b, 22c) which are provided with a sealing agent before punch riveting and/or clinching.

## Revendications

1. Procédé de fabrication d'une structure de véhicule utilitaire avec un châssis, qui comprend des longerons et des traverses disposées pour l'essentiel horizontalement entre les longerons et un panneau de paroi avant (10), qui forme une délimitation d'espace de chargement, le panneau de paroi avant (10) étant disposé entre des montants d'angle (20), qui s'étendent dans la zone des extrémités longitudinales avant des longerons pour l'essentiel en direction verticale et comportent au moins deux parties profilées longitudinales (21),
**caractérisé en ce que**
les parties profilées longitudinales (21) sont reliées l'une à l'autre par rivetage (30) auto-poinçonneur et/ou clinchage.

2. Procédé selon la revendication 1,
**caractérisé en ce que**
les montants d'angle (20) sont reliés au panneau de paroi avant (10) par rivetage auto-poinçonneur et/ou clinchage.

3. Procédé selon la revendication 1 ou 2,
**caractérisé en ce que**
les parties profilées longitudinales (21) comportent des sections de liaison (22a, 22b, 22c), qui sont dotées d'un moyen d'étanchéification avant le rivetage auto-poinçonneur et/ou le clinchage.

4. Procédé selon la revendication 2 ou 3,
**caractérisé en ce que**
le panneau de paroi avant (10) est collé aux montants d'angle (20) avant le rivetage auto-poinçonneur et/ou le clinchage.

5. Procédé selon l'une quelconque des revendications 1 à 4,
**caractérisé en ce que**
les parties profilées longitudinales (21) sont positionnées avant le rivetage auto-poinçonneur et/ou le clinchage par une liaison supplémentaire (40) par conformité de forme, notamment un assemblage par rainure et languette.

6. Procédé selon l'une quelconque des revendications précédentes,
**caractérisé en ce que**
les montants d'angle (20) et le panneau de paroi avant (10) comportent des sections de liaison (22a, 22b, 22c), qui sont dotées d'un moyen d'étanchéification avant le rivetage auto-poinçonneur et/ou le clinchage.
